# EUROPEAN PATENT SPECIFICATION

(11) **EP 3 153 965 B1**
(45) Date of publication and mention of the grant of the patent: **08.05.2019**
(21) Application number: 16170207.1
(22) Date of filing: 10.03.2008
(51) Int. Cl.: G06F 9/345, G06F 9/38, G06F 9/30

(54) **ENHANCHED LOOK-UP TABLE SIGNAL PROCESSING**
SIGNALVERARBEITUNG MIT ERWEITERTER UMSETZUNGSTABELLE
TRAITEMENT AMÉLIORÉ DE SIGNAL DE TABLEAU DE RECHERCHE

(43) Date of publication of application: 12.04.2017
(62) Divisional of application: 08152533.9
(73) Proprietor: Mobileye Vision Technologies Ltd., Jerusalem 9777513 (IL)
(72) Inventor: NAVON, Mr. Mois, Efrat (IL); SIXOU, Mr. Emmanuel, Jerusalem (IL); KREININ, Yossi, Jerusalem (IL); SAJMAN, Mr. Roman, Jerusalem (IL)
(74) Representative: Williams Powell

(56) References cited:
- US-A1- 2003 046 559
- US-B1- 6 446 198
- SHIN Y-C ET AL.: "SPECIAL PURPOSE REGISTER ARRAY FOR REAL-TIME IMAGE PROCESSING", FOURTH ANNUAL IEEE INTERNATIONAL ASIC CONFERENCE AND EXHIBIT, 23 September 1991 (1991-09-23), - 27 September 1991 (1991-09-27), pages P18-1.1-P18-1.4, XP002486783, Rochester, US

## Description

### FIELD AND BACKGROUND OF THE INVENTION

The present invention relates to signal processors and, more particularly, to a device which includes an enhanced look-up table for use in digital signal processing. Specifically, the device includes features appropriate for efficient image processing.

Digital signal processing (DSP) includes analysis and processing of signals in a digital representation. DSP includes audio and speech signal processing, sonar and radar signal processing, sensor array processing; spectral estimation, statistical signal processing, image processing, signal processing for communications, biomedical signal processing, seismic data processing, etc.

Since the goal of DSP is usually to measure or filter continuous real-world analog signals, the first step is usually to convert the signal from an analog to a digital form, by using an analog to digital converter. If the required output signal is another analog output signal, then a digital to analog converter is required at the output.

Algorithms required for DSP are sometimes performed using specialized microprocessors called digital signal processors. Digital signal processors process signals in real time and are generally designed as application-specific integrated circuits (ASICs). When flexibility and rapid development are more important than unit costs at high volume, DSP algorithms may also be implemented using field-programmable gate arrays (FPGAs).

### (from http://en.wikipedia.org/wiki/Digital_signal_processing)

In computer science, a lookup table in digital processing is an array of registers or memory buffer which allows specific access, i.e. read and write commands based on previously known addresses of the registers and/or memory elements. A lookup table is for example, an associative array used to replace a runtime computation with a simpler lookup operation. Through use of a lookup table, rather than performing the computation each time an entry is accessed, a speed gain can be significant, since retrieving a value from memory is often faster than undergoing a time consuming computation.

A classic example is a trigonometry calculation i.e. calculating the sine of an angle. To avoid unnecessary calculations, a number of sine values are pre-calculated, for example for each whole number of degrees, Later, when the program requires the sine of an angle, the lookup table is used to retrieve the sine of a nearby angle from a memory address instead of calculating it using the mathematical formula.

Before the advent of computers, similar tables were used by people to speed up hand calculations. Particularly prevalent were tables of values for trigonometry, logarithms, and statistical density functions.

In image processing, lookup tables (LUT) are often used to provide an output value for a range of index values. One common LUT is a colormap or palette used to determine colors and intensity values with which a particular image is displayed. (from http://en.wikipedia.org/wiki/Look-up_table)

In statistics, a histogram is a data structure or table in which frequency of occurrence of data is tabulated. The possible data values are divided into several categories or bins and the frequency of occurrence is tabulated for each bin. A histogram is often represented graphically as a bar graph. In image processing, image data is typically tabulated in a histogram based on frequency of occurrence in bins of gray scale or color information.

The symbol "x" is used to denote hexadecimal notation as in "xFF".

The terms "location", "index" and "address" are used herein interchangeably.

US patent 6446198 illustrates a lookup operation that is carried out on a data table by logically dividing the data table into a number of smaller sets of data that can be indexed with a single byte of data. Each set of data consists of two vectors, which constitute the operands for a permute instruction. Only a limited number of bits are required to index into the table during the execution of this instruction. The remaining bits of each index are used as masks into a series of select instructions. The select instruction chooses between two vector components, based on the mask, and places the selected components into a new vector. The mask is generated by shifting one of the higher order bits of the index to the most significant position, and then propagating that bit throughout a byte, for example by means of an arithmetic shift. This procedure is carried out for all of the index bytes in the vector, to generate a select mask. The select mask is then used during a select operation, to choose between the results of permute instructions on different ones of the logically divided sets of data. Multi-byte table entries are retrieved by replicating each index value and adding consecutive values to form multiple consecutive index values that are then used in multiple permute operations.

### SUMMARY OF THE INVENTION

According to the present invention there is provided an electronic device implemented on a semiconductor chip, as set out in claim 1. The electronic device includes an array of addressable registers storing data. An input register connected to the array stores an input command parameter (e.g an opcode of a command) and its associated operands in one or more input registers connected to the addressable register array via logic circuitry. The operands may include either data or address operands typically referencing at least one register of the array. Based on the input command parameter, processing circuitry processes the data stored in the addressable registers. A single instance of a command accesses the at least one register of the array. Based on the input command parameter, the command for all of the address operands: reads a datum of the data previously stored in at least one register, updates the datum thereby producing an updated datum, and writes the updated datum into at least one register. The command has multiple address operands referencing the one or more registers and supports two or more of the address operands being identical. The device preferably includes logic circuitry operatively attached between the input register and the processing circuitry, where the logic circuitry provides a logical output signal to the processing circuitry indicating which, if any, of the address operands are identical. The processing circuitry based on the logical output, processes first any identical address operands prior to writing the updated datum into the at least one register. The electronic device preferably includes a clock which provides multiple clock pulses. While the processing circuitry processes the command during at least three clock pulses, a new instance of the command begins processing by the processing circuitry on a consecutive clock pulse so that there is preferably a command throughput of one command per clock pulse. The command preferably either sets a bin of a histogram or increments a bin of a histogram by an incremental value based on the operands in the input registers. The command optionally compares the datum with the incremental values corresponding to a given bin, calculates the minimal value from amongst the datum and the incremental value(s) and writes as the updated datum the minimal value as said updated datum. The command optionally calculates the maximal value from amongst the datum or the incremental values corresponding to a given bin and writes as the updated datum the maximal value of the datum and the incremental value(s).

When the operand input registers contain address operands, they reference a portion of the addressable storage array. When the portion is contiguous, the size of the contiguous portion is preferably specified by a size value stored in an input control register connected to the array. The command preferably accesses solely the contiguous portion of the array of addressable registers. An input control register is connected to the array (via the logic circuitry) and stores a door-knock value. According to a feature of the present invention, upon initiating the command, the door-knock value is decremented and only when the door-knock value equals a previously defined minimum value (typically zero) is the updated datum written into the at least one register.

According to the present invention there is provided an electronic device implemented on a semiconductor chip. The electronic device includes a first array of addressable registers or locations. Various input registers connected to the array (via the logic circuitry), store an input command parameter, operands and a size value. This second array of input registers is connected to the first array. The input registers of the second array store a plurality of address operands referencing a plurality of locations of the first array. The accessible area of said addressable registers is specified by the size value. The address operands as stored respectively in the second array are calculated by the input command parameter and modulo the size value. Upon processing a command based on said input command parameter, processing circuitry processes data stored in the locations indicated by the address operands. A single instance of the command accesses at least one register of the accessible area such that the processing circuitry for all the address commands: reads a datum of the data previously stored in the at least one register, updates the datum thereby producing an updated datum, and writes the updated datum into the at least one register. The single instance of the command referencing the at least one register of the array supports at least two of the address operands being identical. A clock provides multiple clock pulses. The processing circuitry processes the command during three clock pulses, however a new command can be accepted on every clock cycle so that there is preferably a command throughput of one command per clock pulse.

According to an embodiment of the present invention, there is provided an electronic device implemented on a semiconductor chip. The electronic device includes an array of addressable registers. Input registers connected to the array store an input command parameter specifying a command and its operands. A single instance of the input command accesses the at least one register of the array. The command is executed by processing circuitry which processes the command for all its address operands referencing at least one of the addressable registers of the array. Based on the input command parameter, the command writes a datum into the at least one addressable register. A clock attached to the processing circuitry provides clock pulses. The command throughput in number of commands processed per clock pulse is independent of the number of the address operands. The command throughput is preferably one command per clock pulse. An input control register is preferably connected to the logic circuitry storing a door-knock value and upon receiving the command, the door-knock value is decremented so that only when the door-knock value equals a previously defined minimum value, e.g. 0, is the datum written into the at least one register.

### BRIEF DESCRIPTION OF THE DRAWINGS

The invention is herein described, by way of example only, with reference to the accompanying drawings, wherein:
FIG. 1 is a simplified diagram of a device, according to an embodiment of the present invention;
FIG. 2A-C illustrates a simplified timing diagrams of histogram and other commands initiated on consecutive clock pulses, according to embodiments of the present invention;
FIG. 3 and FIG 4 illustrate a simplified block diagram of a processing circuit, according to an embodiment of the present invention.

### DESCRIPTION OF THE PREFERRED EMBODIMENTS

The present invention includes one or more features of an enhanced look-up table integrated into a hardware device. The device may be implemented as part of an image processor designed to provide a command set for efficient image processing.

By way of introduction, the enhanced look-up table device, according to different embodiments of the present invention includes several innovative features. While a prior art look-up table may include registers which allow for register specific read and write accesses, an enhanced look-up table, according to embodiments of the present invention, supports commands to manipulate the data stored in the enhanced look up table in a read-modify-write sequence. An example of a read-modify-write sequence is incrementing bins of a histogram.

Furthermore, whereas a standard LUT might support "vectored" accesses (i.e. one command accesses several consecutive locations), an enhanced look-up table, according to embodiments of the present invention, supports random vectored access i.e., one command can initiate and successfully access several non-consecutive address locations.

Moreover, in an enhanced look up table, according to embodiments of the present invention which maintains a throughput of one command per single clock cycle, random, access to redundant or non-unique locations is supported. A single command which accesses different address locations may include a number of redundant locations. For example, a single command performs respective increment operations, (*e.g*. increment bins of a histogram) to four address locations, *e.g.* 10, 2, 35, 2 such that address location 2 must be incremented twice by the same command. The command is preferably pre-processed to detect if the same address location appears in the command and if the incremental input values are added together so that address location, *e.g*. 2 of look table is incremented once and not twice thereby improving efficiency.

Another useful feature according to embodiments of the present invention is a programmable "delay" register which allows a "door-knock" value to be set indicating the number of commands attempting to access a given address before the address is actually accessed. The delay feature is analogous to knocking on a door. The door opens only after a previously defined "door-knock count" is reached. The term "door-knock" value is used herein to refer to the value of one of the delay control registers.

The principles and operation of an enhanced look-up table, according to the present invention, may be better understood with reference to the drawings and the accompanying description.

By way of introduction, it should be noted, that although the discussion herein relates to image processing, the present invention may, by non-limiting example, alternatively be configured as well using other information and/or signal processing originating as analog and/or digital signals including statistical signal processing, audio signal processing, speech signal processing and array processing from arrays of sensors.

Before explaining embodiments of the invention in detail, it is to be understood that the invention is not limited in its application to the details of design and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

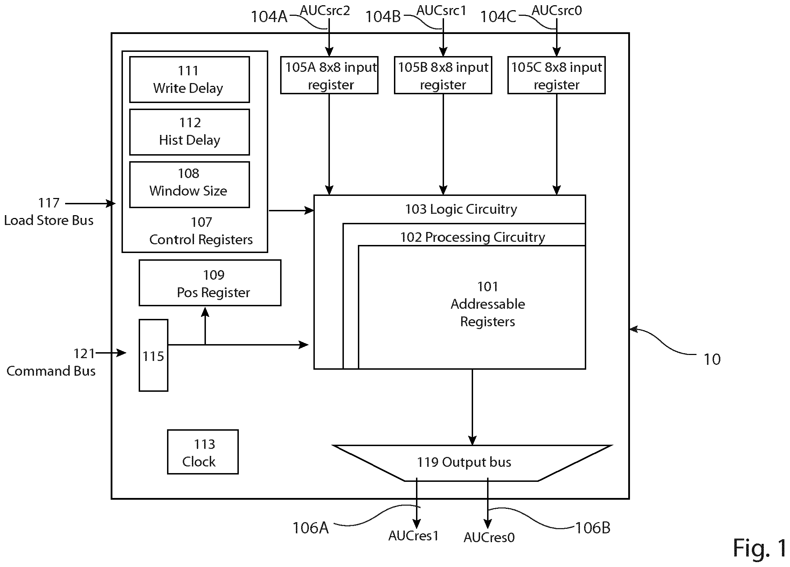

Referring now to the drawings, Figure 1 illustrates a simplified diagram of a device 10 preferably constructed in an ASIC, FPGA or discrete logic on a PCB, or other known methods in the art of electronics. At the core of device **10** is an array **101** of addressable registers or look-up table (LUT) **101** and associated processing circuitry **102** which processes commands accessing array **101.**

An exemplary LUT **101** is a 256 byte register array accessible in odd and even banks. This configuration allows for four odd/even pairs of bytes to be written simultaneously and for eight separate locations to be read simultaneously.

Command input parameters and/or operands are optionally pre-processed by logic circuitry **103.** Device **10** further includes three data bus inputs **104A, 104B** and **104C** of **64** bits, each including for instance 8 input registers of 8 bits each **105A, 105B, 105C** (respectively), and similarly two output busses **106A,B** of 64 bits (8 registers of 8 bits) from output multiplexer **119.**

A memory mapped load/store bus **117** loads configuration or control registers **107.** Configuration Registers **107** which contain preferably 16 bit registers are used to control various command operations. Configuration registers **107** as memory mapped locations on load/store bus **117** are preferably accessed via standard memory commands. Configuration registers **107** can preferably be accessed individually or as a 64 bit word. Configuration registers include window size register **108** and delay control registers: write delay register **111** and histogram delay register **112** used for controlling respective "door-knock" delays prior to executing commands.

A command bus 121 (*e.g.* of 9 bits) indicates the specific command which is latched in a command register 115. Some commands optionally use a register array **109** previously loaded with address locations referencing addresses of array **101.** A clock **113** provides clock pulses to parts of device 10 duration operation.

Input registers **105,** data feeding output multiplexer **119,** position register **109,** control registers **107** and command register **115** are preferably latched so that until new values are latched in the respective registers the previously stored values are maintained.

### Operation of Device 10

Look-up table **101** is preferably implemented by a multi-port register file able to perform multiple, *e.g.* **8,** reads and writes per cycle of clock **113.** Data input to LUT **101** is typically achieved by latching data busses **104** and command bus **121.** The outputs from LUT **101** are driven upon any command that changes a specific output bus (i.e., **106A** AUCRes0 and/or **106B** AUCRes1). Device **10** preferably has a command throughput of 1 clock cycle, such that upon every new clock cycle the incoming command input **115** on the command bus **121** is executed. The device processes commands in a 3 cycle pipeline, such that every command processed has its result available on the output bus **106** after 3 cycles. If there are no commands to execute, the software drives, for instance, NOP commands.

Device **10** preferably handles different command types including: LUT read/write, Histogram, Sliding Window and Miscellaneous, The following table summarizes various command operations, according to different embodiments of the present invention.

**Table 1: Commands**

| Command Type | Command name |
|---|---|
| LUT read/write | |
| | lutread 8ub 8b |
| | lutread 4ub 4h 0 |
| | lutread 4ub 4h 1 |
| | lutwrite 1ub 8b |
| | lutrw 8ub 1ub 8b 8b |

| Histogram | |
|---|---|
| | histb 4ub 4ub |
| | histh 4ub 4ub 0 |
| | histh 4ub 4ub 1 |
| | histbmin 4ub 4ub |
| | histbmax 4ub 4ub |
| | histbset 4ub 4ub |

| Sliding Window | |
|---|---|
| | lutreadinc 8sb 8b |
| | lutreadposld 8ub 8b |
| | lutrwinc 8sb 1ub 8b 8b |
| | lutrwposld 8ub 1ub 8b 8b |
| | lutposld 8ub |

| Misc | |
|---|---|
| | reset |
| | nop |

| | |
|---|---|
| Notation: u=unsigned, s=signed, b=byte (8 bits), h=halfword (16 bits), rw=read/write | |

### Enhanced LUT Commands: Read, Write, ReadWrite

LUT **101** read, write and read/write commands provide for various vectored accesses to device **10.** The read and/or write commands are optionally configured for random addressing to non-consecutive addresses.

Upon command lutread_8ub_8b, eight separate bytes are read typically from eight unique locations indicated by eight separate unsigned bytes which are used as indices to the LUT.

Command lutread_8ub_8b pseudo-code is:
AUCres0[07:00] = LUT(AUCsrc0[07:00])
AUCres0[15:08] = LUT(AUCsrc0[15:08])
AUCres0[23:16] = LUT(AUCsrc0[23:16])
AUCres0[31:24] = LUT(AUCsrc0[31:24])
AUCres0[39:32] = LUT(AUCsrc0[39:32])
AUCres0[47:40) = LUT(AUCsrc0[47:40])
AUCres0[55:48] = LUT(AUCsrc0[55:48])
AUCres0[63:56] = LUT(AUCsrc0[63:56])

Upon command lutread_4ub_4h four separate half words, are read from typically four unique locations indicated by four separate unsigned bytes which are used as indices to LUT **101** . An opcode extension bit optionally indicates whether the 7 bit index to the 128 half words comes from the 7 least significant bits lsbs (ext=0), or the 7 most significant bits (ext=1).

Pseudo code for command lutread_4ub_4h is:
for ext=0:
   AUCres0[15:00]= {LUT(AUCsrc0[06:00],b1),LUT(AUCsrc0[06:00],b0)}
   AUCres0[31:16)= {LUT(AUCsrc0[14:08],b1),LUT(AUCsrc0[14:08],b0)}
   AUCres0[47:32]= {LUT(AUCsrc0[22:16],b1),LUT(AUCsrc0[22:16],b0)}
   AUCres0[63:48]= {LUT(AUCsrc0[30:24],b1),LUT(AUCsrc0[30:24],b0)}
for ext=1:
   AUCres0[15:00]= {LUT(AUCsrc0[07:01),b1),LUT(AUCsrc0[07:01],b0)}
   AUCres0[31:16]= {LUT(AUCsrc0[15:09),b1),LUT(AUCsrc0[15:09],b0)}
   AUCres0[47:32]= {LUT(AUCsrc0[23:17],b1),LUT(AUCsrc0[23:17],b0)}
   AUCres0[63:48]= {LUT(AUCsrc0[31:25],b1),LUT(AUCsrc0[31:25],b0)}

Upon command lutwrite_1ub_8b eight separate bytes, are written to eight consecutive bytes located by one unsigned byte which is used as an index to LUT **101.** The index is eight byte aligned, and thus processing circuitry **102** zeros the 3 least significant bits.

Pseudo code for command lutwrite_1ub_8b is:
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]

Command lutrw_8ub-1ub_8b_8b is a combination of the lutwrite and lutread commands. Eight separate bytes are read from eight unique locations indicated by eight separate unsigned bytes which are used as indices to LUT **101.**

Pseudo code for command lutrw_8ub_1ub_8b_8b is:
AUCres0[07:00] = LUT(AUCsrc0[07:00])
AUCres0[15:08] = LUT(AUCsrc0[15:08])
AUCres0[23:16] = LUT(AUCsrc0[23:16])
AUCres0[31:24] = LUT(AUCsrc0[31:24])
AUCres0[39:32] = LUT(AUCsrc0[39:32])
AUCres0[47:40] = LUT(AUCsrc0[47:40])
AUCres0[55:48] = LUT(AUCsrc0[55:48])
AUCres0[63:56] = LUT(AUCsrc0[63:56])

LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]

Eight separate bytes are written to eight typically consecutive bytes located by one unsigned byte which is used as an index to LUT **101.** The index is eight byte-aligned, and thus processing circuitry **102** zeros the three least significant bits.

Commands lutwrite_1ub_8b and lutrw_8ub_1ub_8b_8b are optionally performed in conjunction with "write delay" control register 111 which contains a door-knock value to be decremented upon receiving a write type command. The actual write indicated in the command is executed when the delay register door-knock value is a previously determined minimal value, typically zero. A decrement on the register is not performed following a successful write of the data.

### Histogram Commands

Histogram commands provide for various histogram manipulations. Each histogram command provides for multiple, *e.g* four, bins to be updated simultaneously. According to an embodiment of the present invention, the four bin locations are not necessarily unique, and as such, a histogram command may actually request updating one and the same bin with four different values. To support this eventuality, the logic circuitry 103 compares bin address operands and performs the requested operation accounting for all corresponding address operands even with redundant bins.

Furthermore, histogram commands are performed in conjunction with Control Register 112 "hist delay" which contains a door-knock value to be decremented upon receiving a histogram command. The actual histogram update requested by the command is executed when the value stored in hist delay register 112 is zero. No decrement on register 112 is performed following a successful histogram update. Typically, histogram commands include read and then write cause a decrement of the door-knock value only following the write phase of the command.

Histogram commands typically require three clock cycles to execute. During the first clock cycle current bin value is read (histrd) and during the second clock cycle to the updated bin value is calculated (histdatcalc) and during the third cycle the updated bin value is written back (histwr) into the same address. According to an embodiment of the present invention during operation of device **10,** a throughput of one cycle is preferably maintained, i.e. a new command is accepted every cycle. In the event that the software performs an illegal sequence of commands, the illegal commands are ignored (converted internally to reset commands) and the original histogram commands will complete normally.

Exemplary histogram commands are described as follows, according to different embodiments of the present invention:
In command histb_4ub_4ub four separate unsigned bytes, specify four indices to LUT 101 organized as 256 bytes which are to be incremented by four corresponding values indicated by four separate unsigned bytes. In the case that the new value to be written is greater than xFF, the new value is saturated to xFF.

Pseudo-code for command histb_4ub_4ub is: :
LUT(AUCsrc0[07:00])= LUT(AUCsrc0[07:00]) + AUCsrc2[07:00]
LUT(AUCsrc0[15:08])= LUT(AUCsrc0[15:08]) + AUCsrc2[15:08]
LUT(AUCsrc0[23:16])= LUT(AUCsrcO[23:16]) + AUCsrc2[23:16]
LUT(AUCsrc0[31:24])= LUT(AUCsrc0[31:24]) + AUCsrc2[31:24]

In command histh_4ub_4ub four separate unsigned bytes, specify four indices to LUT **101** organized as 128 half words which are to be incremented by four corresponding values indicated by four separate unsigned bytes. In the case that the new value to be written is greater than xFFFF, the new value is saturated to xFFFF.

The opcode extension bit preferably indicates whether the 7 bit index comes from the 7 least significant bits (ext=0), or the 7 most significant bits. (ext=1).

Pseudo code for command histh_4ub_4ub is:
LUTbin0 = LUTbin0 + AUCsrc2[07:00]
LUTbin1 = LUTbin1 + AUCsrc2[15:08]
LUTbin2 = LUTbin2 + AUCsrc2[23:16]
LUTbin3 = LUTbin3 +AUCsrc2[31:24]

In the case that more than one index points to the same bin, the bin will be incremented with the sum of all the increment values.

Where, for ext=0
LUTbin0 = {LUT(AUCsrc0[06:00],b1),LUT(AUCsrc0[06:00],b0)}
LUTbin1 = {LUT(AUCsrc0[14:08],b1),LUT(AUCsrc0[14:08],b0)}
LUTbin2 = {LUT(AUCsrc0[22:16],b1),LUT(AUCsrc0[22:16],b0)}
LUTbin3 = {LUT(AUCsrc0[30:24],b1),LUT(AUCsrc0[30:24],b0)}

Where, for ext=1
LUTbin0 = {LUT(AUCsrc0[07:01],b1),LUT(AUCsrc0[07:01],b0)}
LUTbin1 = {LUT(AUCsrc0[15:09],b1),LUT(AUCsrc0[15:09],b0)}
LUTbin2 = {LUT(AUCsrc0[23:17],b1),LUT(AUCsrc0[23:17],b0)}
LUTbin3 = {LUT(AUCsrc0[31:25],b1),LUT(AUCsrc0[31:25],b0)}

In command histbmin_4ub_4ub four separate unsigned bytes, specify four indices to LUT **101** organized as 256 bytes to be updated by four corresponding "update" values indicated by four separate unsigned bytes, such that LUT **101** entry receives the minimum value between its current value and the update operand value.

Pseudo-code for command histbmin_4ub_4ub is:
LUT(AUCsrc0[07:00])= min[LUT(AUCsrc0[07:00]),AUCsrc2[07:00]]
LUT(AUCsrc0[15:08])= min[LUT(AUCsrc0[15:08]),AUCsrc2[15:08]]
LUT(AUCsrc0[23:16])= min[LUT(AUCsrc0[23:16]),AUCsrc2[23:16]]
LUT(AUCsrc0[31:24])= min[LUT(AUCsrc0[31:24]),AUCsrc2[31:24]]

In the case that more than one index points to the same bin, the bin is preferably updated with the minimum of all the update values.

In command histbmax_4ub_4ub four separate unsigned bytes, specify four indices to LUT **101** organized as 256 bytes to be updated by four corresponding "update" values indicated by four separate unsigned bytes, such that LUT **101** entry receives the maximum value between its current value and the update operand,

Pseudo code for command histbmax_4ub_4ub is:
LUT(AUCsrc0[07:00])= max[LUT(AUCsrc0[07:001),AUCsro2[07:00]]
LUT(AUCsrc0[15:08])= max[LUT(AUCsrc0[15:08]),AUCsrc2[15:08]]
LUT(AUCsrc0[23:16])= max[LUT(AUCsrc0[23:16]),AUCsrc2[23:16]]
LUT(AUCsrc0[31:24])= max(LUT(AUCsrc0[31:24]),AUCsrc2[31:24]]

In the case that more than one index points to the same bin, the bin is preferably updated with the maximum of all the update values.

In command histbset_4ub_4ub four separate unsigned bytes, specify four indices to LUT **101** organized as 256 bytes to be set by four corresponding "update" values indicated by four separate unsigned bytes.

Pseudo-code for command histbset_4ub_4ub is:
LUT(AUCsrc0[07:00]) = AUCsrc2[07:00]
LUT(AUCsrc0[15:08]) = AUCsrc2[15:08]
LUT(AUCsrc0[23:16]) = AUCsrc2[23:16]
LUT(AUCsrc0[31:24]) = AUCsrc2[31:24]

In the case that more than one index points to the same bin, the bin is preferably set with the maximum update value given.

### Sliding Window Commands

Sliding window commands provide for various manipulations of LUT **101.** Each sliding window command provides for multiple, *e.g*. eight, locations to be updated simultaneously. Sliding window commands are performed in conjunction with "window size" control register **108** and internal register array "position register" **109.** Window size register **108** stores a maximum value of any LUT **101** index stored in position register **109.** When the window size register **108** is updated, the value stored therein correspondingly limits the LUT **101** index. A position update command (lutposld) takes the index values stored in one or more 8x8 input registers **105** and performs the modulo operation on each by the window size value stored in window size control register **108,** storing the results in position register **109.** The modulo operation (%) is equivalent to zeroing the most significant bits greater than the bits required to represent the window size. For example, for a window size of 32, bits 4:0 are maintained and bits 7:5 are zeroed.

Exemplary sliding window commands, according to different embodiments of the present invention are described as follows:
Upon command lutreadinc_8sb_8b eight separate bytes are read from LUT 101 as specified in position register **109.** The indices of position register **109** are then incremented by the eight separate signed bytes modulo the value stored in window size register 108. Pseudo-code for command lutreadinc_8sb_8b is:
AUCres0[07:00] = LUT(POS[07:00])
AUCres0[15:08] = LUT(POS[15:08])
AUCres0[23:16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (POS[07:00] + AUCsrc0[07:00]) % Crwinsize
POS[15:08] = (POS[15:08] + AUCsrc0[15:08]) % Crwinsize
POS[23:16] = (POS[23:16] + AUCsrc0[23:16]) % Crwinsize
POS[31:24] = (POS[31:24] + AUCsrc0[31:24]) % Crwinsize
POS[39:32] = (POS[39:32] + AUCsrc0[39:32]) % Crwinsize
POS[47:40] = (POS[47:40] + AUCsrc0[47:40]) % Crwinsize
POS[55:48] = (POS[55:48] + AUCsrc0[55:48]) % Crwinsize
POS[63:56] = (POS[63:56] + AUCsrc0[63:56]) % Crwinsize

Upon command lutreadposld_8ub_8b eight separate bytes are read from LUT 101 as specified in position register **109** which contains eight unique indices.

The eight indices of position register **109** are then set by the eight separate unsigned bytes modulo the value stored in window size register **108..**

Pseudo-code for command lutreadposld_8ub_8b is:
AUCres0[07:00] = LUT(POS[07:00])
AUCres0[15:08] = LUT(POS[15:08])
AUCres0[23:16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (AUCsrc0[07:00]) % Crwinsize
POS[15:08] = (AUCsrc0[15:08]) % Crwinsize
POS[23:16] = (AUCsrc0[23:16]) % Crwinsize
POS[31:24] = (AUCsrc0[31:24]) % Crwinsize
POS[39:32] = (AUCsrc0[39:32]) % Crwinsize
POS[47:40] = (AUCsrc0[47:40]) % Crwinsize
POS[55:48] = (AUCsrc0[55:48]) % Crwinsize
POS[63:56] = (AUCsrc0[63:56]) % Crwinsize

Upon command lutrwinc_8ub_1ub_8b_8b eight separate bytes are read from LUT **101** as specified in position register **109** which contains eight unique indices. The eight indices of position register **109** are then incremented by the eight separate signed bytes modulo the value stored in window register **108.** Eight separate bytes are written to LUT **101** as specified in one unsigned byte which is an initial index to be incremented to store the 8 bytes sequentially in LUT **101.** The initial index must be 8 byte-aligned, and thus the hardware zeros the 3 least significant bits. The write operation is optionally performed in conjunction with write delay control register **111** which contains a value to be decremented upon receiving a write type command. The actual write indicated in the command will only be executed when the delay register value is zero (no decrement on register **111** will be performed following a successful write of the data). Pseudo-code for command lutrwinc_8ub_1ub_8b_8b is:
AUCres0[07:00] = LUT(POS[07:00])
AUCres0[15:08] = LUT(POS[15:08])
AUCres0[23:16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (POS[07:00] + AUCsrc0[07:00]) % Crwinsize
POS[15:08] = (POS[15:08] + AUCsrc0[15:08]) % Crwinsize
POS[23:16] = (POS[23:16] + AUCsrc0[23:16]) % Crwinsize
POS[31:24] = (POS[31:24] + AUCsrc0[31:24]) % Crwinsize
POS[39:32] = (POS[39:32] + AUCsrc0[39:32]) % Crwinsize
POS[47:40] = (POS[47:40] + AUCsrc0[47:40]) % Crwinsize
POS[55:48] = (POS[55:48] + AUCsrc0[55:48]) % Crwinsize
POS[63:56] = (POS[63:56] + AUCsrc0[63:56]) % Crwinsize
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07;03],111) = AUCsrc2[63:56]

Upon command lutrwposld_8sb_1ub_8b_8b eight separate bytes, are read from LUT **101** as specified in position register **109** which contains eight unique indices. The eight indices of position register **109** are then set by the eight separate unsigned bytes modulo the value stored in window register **108.** Eight separate bytes are written to the LUT as specified in the one unsigned byte which is an initial index to be incremented to store the 8 bytes sequentially in LUT **101.** The index is eight byte aligned, and thus processing circuitry **102** zeros the three least significant bits. The write operation is performed in conjunction with write delay control register **111** which contains a value to be decremented upon receiving any write type command. The actual write indicated in the command will only be executed when the delay register value is zero (no decrement on write delay control register **111** is performed following a successful write of the data.

Pseudo code for command lutrwposld_8sb_1ub_8b_8b is:
AUCres0[07:00] = LUT(POS[07:00])
AUCres0[15:08] = LUT(POS[15:08])
AUCres0[23:16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (AUCsrc0[07:00]) % Crwinsize
POS[15:08] = (AUCsrc0[15:08]) % Crwinsize
POS[23:16] = (AUCsrc0[23:16]) % Crwinsize
POS[31:24] = (AUCsrc0[31:24]) % Crwinsize
POS[39:32] = (AUCsrc0[39:32]) % Crwinsize
POS[47:40] = (AUCsrc0[47:40]) % Crwinsize
POS[55:48] = (AUCsrc0[55:48]) % crwinsize
POS[63:56] = (AUCsrc0[63:56]) % Crwinsize
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(Aucsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]

Upon command lutposld eight bytes of index data are loaded into 64 bit position register **109** (1 byte per position) whereby the values are the result of the input data bytes modulo the value stored in widow size control register **108**. Processing circuitry **102** updates position register **109** as specified by the specific command. Pseudo code for command lutposld is:
POS[07:00] = (AUCsrc0[07:00]) % Crwinsize
POS[15:08] = (AUCsrc0[15:08]) % Crwinsize
POS[23:16] = (AUCsrc0[23:16]) % Crwinsize
POS[31:24] = (AUCsrc0[31:24]) % Crwinsize
POS[39:32] = (AUCsrc0[39:32]) % Crwinsize
POS[47:40] = (AUCsrc0[47:40]) % Crwinsize
POS[55:48] = (AUCsrc0[55:48]) % Crwinsize
POS[63:56] = (AUCsrc0[63:56]) % Crwinsize

### Miscellaneous Commands

The Reset command zeros output register **119** so that output appears zero until the next command which changes outputs is executed.

The Nop command is used as required in order to maintain values of the output register **119** valid until the next command which changes values of output register **119.**

### Histogram - Data Forwarder

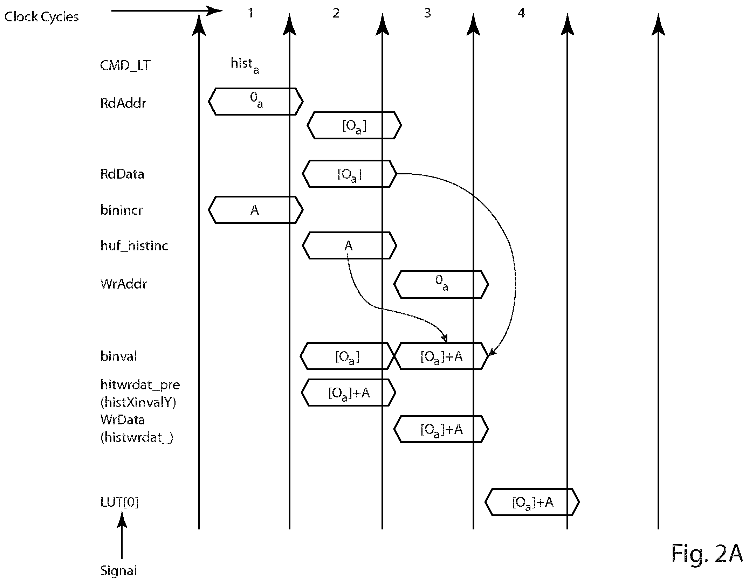

Reference is now made to Figure 2A which illustrates a simplified timing diagram of a histogram command for LUT **101,** according to an embodiment of the present invention. Histogram circuitry typically requires a minimum of three clock cycles to complete one histogram increment command, *e.g*. histb_4ub_4ub. A histogram command, *e.g*. histb_4ub_4ub, is used to access address location 0 in order to increment the value stored in address location 0 by a value A. At clock cycle 1, address 0 and increment value A are input. At clock cycle 2, the value [0] stored in address 0 is available on rdData bus and added to the increment value (huf_histinc). At clock cycle 3, the new bin value (binval) calculated by adding the respective values in huf_histinc and rdData is now ready on WrDat bus to be written to LUT **101.**

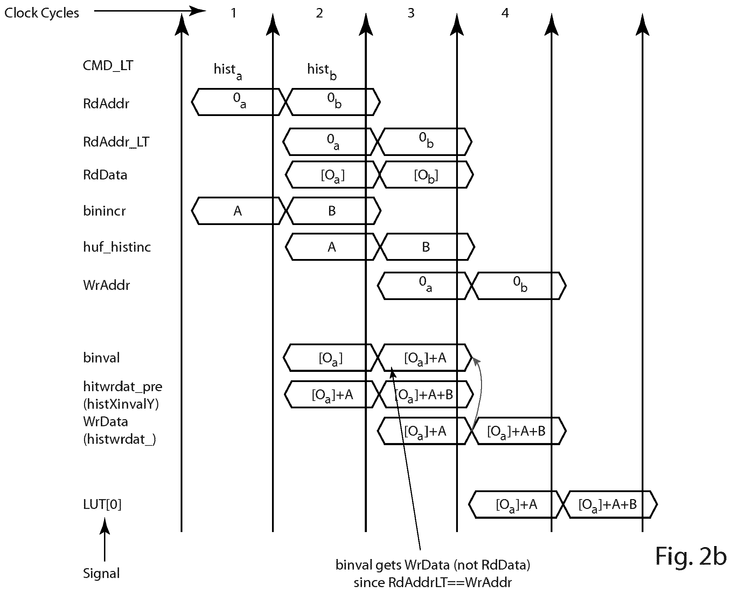

The data forwarding mechanism recognizes that a new command requires data from the previous command not yet available in the memory element or register, and consequently performs a "read" operation not from the memory cell which is not yet ready for reading but from another bus within the internal data pipe which has the valid datum. Reference is now made to Figure 2B which includes a simplified block diagram of two consecutive histogram commands *histₐ* as in the timing diagram of Figure 2A and in addition a second histogram command *hist_{b}* which is input into ELUT 10 on the next clock cycle, clock cycle 2. It is readily seen that the contents of location 0 now on the RdData bus in cycle 3 is not valid for use as it does not include the increment value A from command *histₐ*. Instead, according to an embodiment of the present invention, processing circuitry **102** realizes this condition and "forwards" the data calculated in the first hist command (wherein WrDat has [0ₐ]+A) and that is used as the "contents read" (i.e., binval) by the second hist command *hist_{b}.*

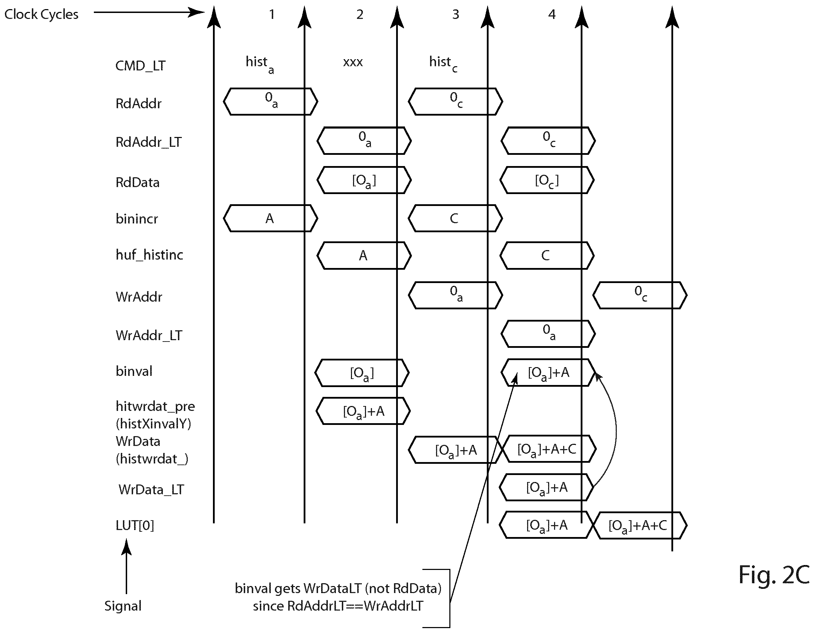

Reference is now made to Figure 2C, which illustrates a first histogram command *histₐ* as in Figure 2A, followed by another command xxx during the second clock cycle followed by a third histogram command on the third clock cycle, *hist_{c}.*

As shown, the second histogram command (*hist_{c}*) must not use the contents of location 0 (marked 0_{c}) now on the RdData bus since this does not account for the previous hist command (*histₐ*) which is still in progress. Instead, processing circuitry **102** recognizes this condition and "forwards" the data calculated in the first hist command (WrDat_LT has [0ₐ]+A) and that is used as the "contents read" (i.e., binval) by the second hist command (*hist_{c}*). It should be noted that the timing the command sequence *histₐ-xxx-hist_{c}* as illustrated in Figure 2C is a different case then two consecutive hist commands *histₐ-hist_{b}* because in the timing of Figure 2C the data from the first hist command is one state further in the internal data pipeline (i.e., the *histₐ-hist_{b}* scenario used WrDat for data forwarding whereas the *histₐ-xxx-hist_{c}* scenario used WrDat_LT).

### Histogram Update Logic

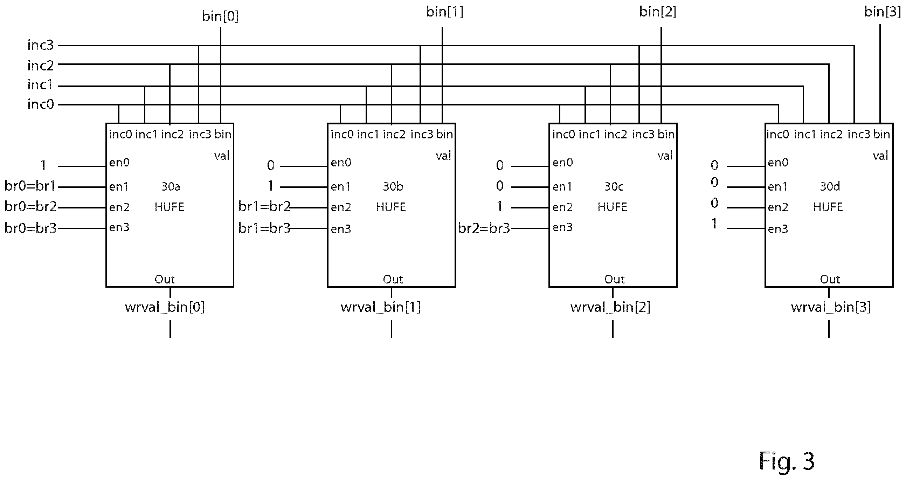

Reference is now made to Figure 3, illustrating a simplified block diagram of a circuit of device **10,** according to an embodiment of the present invention. In order to support the multiple histogram commands as described above, *e.g*. bin increment, minimum, maximum, and set, and further account for the possibility that a single instance of a histogram command may contain multiple references to a single bin, multiple generalized logic units **30a, 30b, 30c,** and **30d** or Histogram Update Function Elements (HUFE **30a-30d**) such that each handles a single bin referenced by the single instance of a histogram command , *e.g*. four elements **30** for four bins as shown in Figure 3.

Each HUFE **30** has four inputs ***inc0, inc1, inc2*** and ***inc3*** which correspond to the four incremental values input in the histogram command for incrementing the four bin values, respectively. Each HUFE **30** has as an input a bin value input corresponding to the bin it is processing. HUFE **30** also four logical inputs ***en0, en1, en2*** and ***en3*** which indicate the address operands which are the same, if any are the same. Logical inputs ***en0, en1, en2*** and ***en3*** are preferably generated and output by logic circuitry **103.** For HUFE **30a, *en0*** is always enabled with a value '1', ***en1*** is enabled only when the bin0 and bin1 are the same address locations; ***en2*** is enabled only when bin0 and bin2 are the same address locations; ***en3*** is enabled only when bin0 and bin3 are the same address locations. For HUFE **30b, *en0*** is always disabled with a value '0', ***en1*** is always enabled; ***en2*** is enabled only when bin1 and bin2 are the same address locations; en3 is enabled only when bin1 and bin3 are the same address locations. For HUFE 30c, ***en0*** and ***en1*** are always disabled with a value '0', ***en2*** is always enabled; ***en3*** is enabled only when bin2 and bin3 are the same address locations and for HUFE **30d, *en0, en1,*** and ***en*2** are always disabled with a value '0', and *en3* is always enabled. Each HUFE **30** includes a respective output **wrval_bin[0], wrval_bin[1], wrval_bin[2], wrval_bin[3]** of an updated bin value. In the case where an out value is unneeded since the bin address was handled by a previous HUFE (e.g., bin0=bin3) so the bin output is unnecessary and the value is simply ignored by processing circuitry 102 responsible for writing the bin value to LUT **101.**

Following the execution of the command the final value is "saturated" if necessary. That is, if the total sum of the inputs exceeded the 8b or 16b output width, then the output value is maxed to either xFF or xFFFF, respectively.

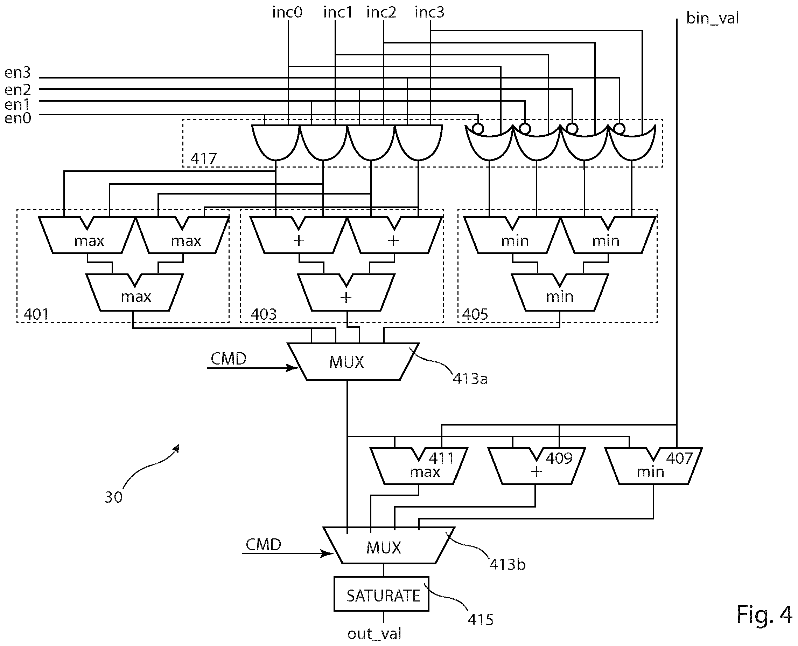

Reference is now made to Figure 4, which is an exemplary block diagram of HUFE **30.** HUFE **30** functions to perform histogram commands for any of four histogram commands, initializing a bin value, incrementing a bin value by an input value, finding a minimum between the current bin value and an input value or finding a maximum between the current bin value and an input value.

When none of the inputs bin addresses are the same, then each HUFE **30** instance operates independently on the input inc value. Thus for example HUFE **30d,** will have only ***en3*** enabled and the input value ***inc3*** will then be handled as the lone input operand according to the input command. Thus, if the command is "max" the *inc3* input will be fed uninhibited through logic **417, 401, 403, 405, 413a** and arriving at block **411** which calculates the maximum between its inputs ***inc3*** and ***bin_val.*** If the command was "inc" then block **409** adds inputs ***inc3*** and ***bin_val,*** and if the command was "min" then block **407** calculates the minimum between its inputs ***inc3*** and ***bin_val.*** For the "set" command *inc3* just passes through to multiplexer **413b.** Depending on the command (*e.g.* set, increment, maximum or minimum) being used a control signal to multiplexer **413b** selects the appropriate output to ***out-val.***

Otherwise, when two or more address operands are the same, logic circuitry **103** generates enable signals ***en0, en1, en2*** and ***en3*** accordingly. Block **417** includes logic gates which route the input signals respectively to block **401** for performing a preliminary maximum calculation between any of inputs *inc0, inc1, inc2 and inc3* for which the respective address operands are the same, similarly to block **405** for performing a preliminary minimum calculation, between any of inputs ***inc0, inc1, inc2 and inc3*** for which the respective address operands are the same and to block **403** for addition of any of inputs ***inc0, inc1, inc2 and inc3*** for which the respective address operands are the same. In the event that the total sum of the inputs exceeded the 8 bit or 16 bit output width, block **415** functions to saturate the output value to its maximum (xFF or xFFFF, respectively).

While the invention has been described with respect to a limited number of embodiments, it will be appreciated that many variations, modifications and other applications of the invention may be made, the scope of the invention being defined by the appended claims.

## Claims

1. An electronic look-up device (10) implemented on a semiconductor chip, the electronic look-up device, comprising:
(a) an array of addressable registers (101) storing a plurality of data;
(b) a plurality of input registers (105) operatively connected to said array, said input registers storing an input command parameter of a command and a plurality of operands of the command; **characterized by** said operands including a plurality of address operands referencing a plurality of registers of said array;
(c) processing circuitry (102) which processes, based on said input command parameter, said data; wherein the command accesses non-consecutive registers of said array, and based on said input command parameter said processing circuitry for all of said address operands: reads a datum of said data previously stored in said registers, updates said datum thereby producing an updated datum, and writes said updated datum into one of said plurality of registers of said array ; and
(d) logic circuitry (103) operatively attached between said input register and said processing circuitry, said logic circuitry pre-processing the command to detect if any of said operands are identical and providing a logical output signal to said processing circuitry indicating which if any of said address operands are identical thereby supporting at least two of said address operands being identical.

2. The electronic look-up device (10), according to claim 1, wherein said processing circuitry based on said logical output signal, processes any said identical address operands prior to writing said updated datum into one of said non-consecutive registers.

3. The electronic look-up device (10), according to claim 1, further comprising:
(e) a clock (113) which provides a plurality of clock pulses, wherein said processing circuitry processes said command during at least three clock pulses, wherein a new command begins processing by said processing circuitry on a consecutive clock pulse so that there is a command throughput of at least one command per clock pulse.

4. The electronic look-up device (10), according to claim 1, wherein said command sets a bin of a histogram by an incremental value.

5. The electronic look-up device (10), according to claim 1, wherein said command increments a bin of a histogram by an incremental value.

6. The electronic look-up device (10), according to claim 1, wherein said command compares said datum with at least one incremental value, said command calculates the minimal value selected from the group of said datum and said at least one incremental value and said command writes said minimal value as said updated datum.

7. The electronic look-up device (10), according to claim 1, wherein said command compares said datum with at least one incremental value, said command calculates the maximal value selected from the group of said datum and said at least one incremental value and writes said maximal value as updated datum.

8. The electronic look-up device (10), according to claim 1, further comprising:
(e) a second array of registers (109) operatively connected to said array; wherein said registers of said second array store a plurality of locations referencing a portion of said array.

9. The electronic look up device (10), according to claim 8, wherein said portion is contiguous further comprising
(f) an input control register (109) operatively connected to said logic circuitry; wherein the size of said contiguous portion is specified by a size value stored in said input control register.

10. The electronic look up device (10), according to claim 9, wherein said command accesses a location solely within said contiguous portion of said array of addressable registers.

11. The electronic look up device (10), according to claim 8, further comprising (f) an input control register (109) operatively connected to said logic circuitry, wherein a door-knock value is stored in said input control register, wherein upon initiating said command, said door-knock value is decremented and only upon said door-knock value equaling a previously defined minimum value is said updated datum written into one of said addressable registers.

12. The electronic look up device (10), according to claim 1, further comprising:
(e) a second array (109) of registers operatively connected to said first array; wherein said operands reference said second array of registers; wherein said registers of said second array store a plurality of address operands referencing a plurality of locations of said first array and **characterized by** the accessible area of said addressable registers (101) is specified by said size value.

13. The electronic look up device (10), according to claim 12, wherein said address operands as stored respectively in said second array are calculated based on said input command parameter modulo said size value.

14. The electronic look up device (10), according to claim 12, further comprising:
(f) processing circuitry (102) which upon processing a single instance of a command based on said input command parameter processes a plurality of data stored in said locations.

15. The electronic look up device (10), according to claim 14, wherein a single instance of said command accesses a plurality of said addressable registers of said accessible area, and based on said input command parameter, said command for said at least one addressable register and for all said address operands: reads a datum of said data previously stored in said at least one register, updates said datum thereby producing an updated datum, and writes said updated datum into said at least one register.

16. The electronic look up device (10) according to claim 1 wherein if the same address operands appears in the command and if incremental input values are added together then the value stored in a register that is addressed by the same address operands is incremented once.

17. The electronic look up device (10) according to claim 1 wherein the logic circuitry outputs an enable signal for each one of the address operands that are the same.

18. The electronic look up device (10) according to claim 17 wherein the processing circuitry performs preliminary a maximum calculation between incremental input values related to the same address operands.

19. The electronic look up device (10) according to claim 18 wherein the processing circuitry calculates a sum of incremental input values related to the same address operands; and when if the sum exceeds an output width then saturate the sum.

## Patentansprüche

1. Elektronische Look-up-Vorrichtung (10), die auf einem Halbleiterchip implementiert ist, wobei die elektronische Look-up-Vorrichtung umfasst:
(a) eine Anordnung von adressierbaren Registern (101), die eine Vielzahl von Daten speichern;
(b) eine Vielzahl von Eingaberegistern (105), die operativ mit der Anordnung verbunden sind, wobei die Eingaberegister einen Eingabebefehlsparameter eines Befehls und eine Vielzahl von Operanden des Befehls speichern; **dadurch gekennzeichnet, dass** die Operanden eine Vielzahl von Adressoperanden umfassen, die sich auf eine Vielzahl von Registern der Anordnung referenzieren;
(c) eine Verarbeitungsschaltung (102), die basierend auf dem Eingabebefehlsparameter die Daten verarbeitet; wobei der Befehl auf nicht aufeinanderfolgende Register der Anordnung zugreift und basierend auf dem Eingabebefehlsparameter die Verarbeitungsschaltung für alle der Adressoperanden: ein Datum der zuvor in den Registern gespeicherten Daten liest, das Datum aktualisiert, wodurch ein aktualisiertes Datum erzeugt wird, und das aktualisierte Datum in eines der Vielzahl von Registern der Anordnung schreibt; und
(d) eine logische Schaltung (103), die operativ zwischen dem Eingaberegister und der Verarbeitungsschaltung angebracht ist, wobei die logische Schaltung den Befehl zum Erkennen, ob irgendwelche der Operanden identisch sind, vorverarbeitet und ein logisches Ausgangssignal für die Verarbeitungsschaltung bereitstellt, das angibt, welche der Adressoperanden identisch sind, wodurch unterstützt wird, dass mindestens zwei der Adressoperanden identisch sind.

2. Elektronische Look-up-Vorrichtung (10) nach Anspruch 1, wobei die Verarbeitungsschaltung basierend auf dem logischen Ausgangssignal alle identischen Adressoperanden verarbeitet, bevor das aktualisierte Datum in eines der nicht aufeinanderfolgenden Register geschrieben wird.

3. Elektronische Look-up-Vorrichtung (10) nach Anspruch 1, die ferner umfasst:
(e) einen Takt (113), der eine Vielzahl von Taktimpulsen bereitstellt, wobei die Verarbeitungsschaltung den Befehl während mindestens drei Taktimpulsen verarbeitet, wobei ein neuer Befehl ein Verarbeiten durch die Verarbeitungsschaltung mit einem nachfolgenden Takt beginnt, so dass ein Befehlsdurchsatz von mindestens einem Befehl pro Taktimpuls vorliegt.

4. Elektronische Look-up-Vorrichtung (10) nach Anspruch 1, wobei der Befehl einen Platz (engl.: bin) eines Histogramms auf einen inkrementellen Wert setzt.

5. Elektronische Look-up-Vorrichtung (10) nach Anspruch 1, wobei der Befehl einen Platz (engl.: bin) eines Histogramms durch einen inkrementellen Wert inkrementiert.

6. Elektronische Look-up-Vorrichtung (10) nach Anspruch 1, wobei der Befehl das Datum mit mindestens einem inkrementellen Wert vergleicht, der Befehl den Minimalwert berechnet, der aus der Gruppe des Datums und des mindestens einen inkrementellen Wertes ausgewählt ist, und der Befehl den Minimalwert als das aktualisierte Datum schreibt.

7. Elektronische Look-up-Vorrichtung (10) nach Anspruch 1, wobei der Befehl das Datum mit mindestens einem inkrementellen Wert vergleicht, der Befehl den Maximalwert berechnet, der aus der Gruppe des Datums und des mindestens einen inkrementellen Wertes ausgewählt ist, und den Maximalwert als aktualisiertes Datum schreibt.

8. Elektronische Look-up-Vorrichtung (10) nach Anspruch 1, die ferner umfasst:
(e) eine zweite Anordnung von Registern (109), die operativ mit der Anordnung verbunden sind; wobei die Register der zweiten Anordnung eine Vielzahl von Stellen speichern, die auf einen Abschnitt der Anordnung referenzieren.

9. Elektronische Look-up-Vorrichtung (10) nach Anspruch 8, wobei der Abschnitt ferner zusammenhängend oder angrenzend ist, umfassend
(f) ein Eingabesteuerregister (109), das operativ mit der logischen Schaltung verbunden ist;
wobei die Größe des zusammenhängenden oder angrenzenden Abschnitts durch einen Größenwert angegeben wird, der in dem Eingabesteuerregister gespeichert ist.

10. Elektronische Look-up-Vorrichtung (10) nach Anspruch 9, wobei der Befehl auf eine Stelle nur innerhalb des zusammenhängenden oder angrenzenden Abschnitts der Anordnung der adressierbaren Register zugreift.

11. Elektronische Look-up-Vorrichtung (10) nach Anspruch 8, ferner umfassend (f) ein Eingabesteuerregister (109), das operativ mit der logischen Schaltung verbunden ist,
wobei ein Türklopfwert in dem Eingabesteuerregister gespeichert ist, wobei bei Initiierung des Befehls der Türklopfwert dekrementiert wird und erst, wenn der Türklopfwert einem zuvor definierten Minimalwert entspricht, das aktualisierte Datum in eines der adressierbaren Register geschrieben wird.

12. Elektronische Look-up-Vorrichtung (10) nach Anspruch 1, die ferner umfasst:
(e) eine zweite Anordnung (109) von Registern, die operativ mit der ersten Anordnung verbunden sind; wobei die Operanden die zweite Anordnung von Registern referenzieren; wobei die Register der zweiten Anordnung eine Vielzahl von Adressoperanden speichern, die sich auf eine Vielzahl von Stellen der ersten Anordnung referenzieren, und **gekennzeichnet durch** den zugänglichen Bereich der adressierbaren Register (101) durch den Größenwert spezifiziert ist.

13. Elektronische Look-up-Vorrichtung (10) nach Anspruch 12, wobei die Adressoperanden, wie sie jeweils in der zweiten Anordnung gespeichert sind, basierend auf dem Eingabebefehlsparameter-modulo des Größenwerts berechnet werden.

14. Elektronische Look-up-Vorrichtung (10) nach Anspruch 12, die ferner umfasst:
(f) eine Verarbeitungsschaltung (102), die beim Verarbeiten einer einzelnen Instanz eines Befehls, der auf dem Eingabebefehlsparameter basiert, eine Vielzahl von Daten verarbeitet, die an den Stellen gespeichert sind.

15. Elektronische Look-up-Vorrichtung (10) nach Anspruch 14, wobei eine einzelne Instanz des Befehls auf eine Vielzahl der adressierbaren Register des zugänglichen Bereichs zugreift, und basierend auf dem Eingabebefehlsparameter der Befehl für das mindestens eine adressierbare Register und für alle Adressoperanden: ein Datum der zuvor in dem mindestens einen Register gespeicherten Daten liest, das Datum aktualisiert und dadurch ein aktualisiertes Datum erzeugt und das aktualisierte Datum in das mindestens eine Register schreibt.

16. Elektronische Look-up-Vorrichtung (10) nach Anspruch 1, wobei, wenn dieselben Adressoperanden in dem Befehl erscheinen und wenn inkrementelle Eingabewerte zusammen addiert werden, dann der in einem Register gespeicherte Wert, der durch denselben Adressoperanden adressiert wird, einmal erhöht wird.

17. Elektronische Look-up-Vorrichtung (10) nach Anspruch 1, wobei die logische Schaltung ein Freigabesignal für jeden der Adressoperanden ausgibt, die dieselben sind.

18. Elektronische Look-up-Vorrichtung (10) nach Anspruch 17, wobei die Verarbeitungsschaltung eine Maximum-Berechnung zwischen inkrementellen Eingabewerten, die sich auf dieselben Adressoperanden beziehen, vorläufig durchführt.

19. Elektronische Look-up-Vorrichtung (10) nach Anspruch 18, wobei die Verarbeitungsschaltung eine Summe der inkrementellen Eingabewerte berechnet, die sich auf dieselben Adressoperanden beziehen; und, wenn die Summe eine Ausgabebreite überschreitet, dann die Summe saturiert.

## Revendications

1. Dispositif de consultation électronique (10) mis en oeuvre sur une puce à semi-conducteurs, le dispositif de consultation électronique comprenant :
(a) un réseau de registres adressables (101) stockant une pluralité de données ;
(b) une pluralité de registres d'entrée (105) connectés de manière fonctionnelle audit réseau, lesdits registres d'entrée stockant un paramètre d'instruction d'entrée d'une instruction et une pluralité d'opérandes de l'instruction ; **caractérisé par** lesdits opérandes comprenant une pluralité d'opérandes d'adresse faisant référence à une pluralité de registres dudit réseau ;
(c) une circuiterie de traitement (102) qui traite, sur la base dudit paramètre d'instruction d'entrée, lesdites données ; l'instruction accédant à des registres non consécutifs dudit réseau, et, sur la base dudit paramètre d'instruction d'entrée, ladite circuiterie de traitement pour l'ensemble desdits opérandes d'adresse : lisant une donnée parmi lesdites données stockées précédemment dans lesdits registres, mettant à jour ladite donnée, permettant ainsi de produire une donnée mise à jour, et écrivant ladite donnée mise à jour dans l'un de ladite pluralité de registres dudit réseau ; et
(d) une circuiterie logique (103) fixée de manière fonctionnelle entre ledit registre d'entrée et ladite circuiterie de traitement, ladite circuiterie logique pré-traitant l'instruction pour détecter si certains desdits opérandes sont ou non identiques et fournissant un signal de sortie logique à ladite circuiterie de traitement indiquant, s'il y en a, lesquels desdits opérandes d'adresse sont identiques, permettant ainsi de prendre en charge au moins deux desdits opérandes d'adresse qui sont identiques.

2. Dispositif de consultation électronique (10) selon la revendication 1, dans lequel ladite circuiterie de traitement, sur la base dudit signal de sortie logique, traite n'importe lequel desdits opérandes d'adresse identiques avant d'écrire ladite donnée mise à jour dans l'un desdits registres non consécutifs.

3. Dispositif de consultation électronique (10) selon la revendication 1, comprenant en outre :
(e) une horloge (113) qui fournit une pluralité d'impulsions d'horloge, ladite circuiterie de traitement traitant ladite instruction pendant au moins trois impulsions d'horloge, une nouvelle instruction commençant le traitement, par ladite circuiterie de traitement, sur une impulsion d'horloge consécutive de telle sorte qu'il existe un débit d'instructions d'au moins une instruction par impulsion d'horloge.

4. Dispositif de consultation électronique (10) selon la revendication 1, dans lequel ladite instruction définit un compartiment d'un histogramme par une valeur incrémentale.

5. Dispositif de consultation électronique (10) selon la revendication 1, dans lequel ladite instruction incrémente un compartiment d'un histogramme d'une valeur incrémentale.

6. Dispositif de consultation électronique (10) selon la revendication 1, dans lequel ladite instruction compare ladite donnée à au moins une valeur incrémentale, ladite instruction calcule la valeur minimale choisie dans le groupe comprenant ladite donnée et ladite au moins une valeur incrémentale, et ladite instruction écrit ladite valeur minimale en tant que donnée mise à jour.

7. Dispositif de consultation électronique (10) selon la revendication 1, dans lequel ladite instruction compare ladite donnée à au moins une valeur incrémentale, ladite instruction calcule la valeur maximale choisie dans le groupe comprenant ladite donnée et ladite au moins une valeur incrémentale, et écrit ladite valeur maximale en tant que donnée mise à jour.

8. Dispositif de consultation électronique (10) selon la revendication 1, comprenant en outre :
(e) un second réseau de registres (109) connectés de manière fonctionnelle audit réseau ; lesdits registres dudit second réseau stockant une pluralité d'emplacements faisant référence à une partie dudit réseau.

9. Dispositif de consultation électronique (10) selon la revendication 8, dans lequel ladite partie est contiguë, comprenant en outre
(f) un registre de commande d'entrée (109) connecté de manière fonctionnelle à ladite circuiterie logique ;
la taille de ladite partie contiguë étant spécifiée par une valeur de taille stockée dans ledit registre de commande d'entrée.

10. Dispositif de consultation électronique (10) selon la revendication 9, dans lequel ladite instruction accède à un emplacement uniquement dans ladite partie contiguë dudit réseau de registres adressables.

11. Dispositif de consultation électronique (10) selon la revendication 8, comprenant en outre
(f) un registre de commande d'entrée (109) connecté de manière fonctionnelle à ladite circuiterie logique, une valeur de cognage de porte étant stockée dans ledit registre de commande d'entrée, dans lequel, lors de l'initiation de ladite instruction, ladite valeur de cognage de porte est décrémentée et uniquement sur ladite valeur de cognage de porte égale à une valeur minimale précédemment définie se trouve ladite donnée mise à jour écrite dans l'un desdits registres adressables.

12. Dispositif de consultation électronique (10) selon la revendication 1, comprenant en outre :
(e) un second réseau (109) de registres connectés de manière fonctionnelle audit premier réseau ; lesdits opérandes faisant référence audit second réseau de registres ; lesdits registres dudit second réseau stockant une pluralité d'opérandes d'adresse faisant référence à une pluralité d'emplacements dudit premier réseau, et **caractérisé par le fait que** la zone accessible desdits registres adressables (101) est spécifiée par ladite valeur de taille.

13. Dispositif de consultation électronique (10) selon la revendication 12, dans lequel lesdits opérandes d'adresse tels que stockés respectivement dans ledit second réseau sont calculés sur la base dudit paramètre d'instruction d'entrée modulo ladite valeur de taille.

14. Dispositif de consultation électronique (10) selon la revendication 12, comprenant en outre :
(f) une circuiterie de traitement (102) qui, lors du traitement d'une instance unique d'une instruction sur la base dudit paramètre d'instruction d'entrée, traite une pluralité de données stockées dans lesdits emplacements.

15. Dispositif de consultation électronique (10) selon la revendication 14, dans lequel une instance unique de ladite instruction accède à une pluralité desdits registres adressables de ladite zone accessible, et, sur la base dudit paramètre d'instruction d'entrée, ladite instruction pour ledit au moins un registre adressable et pour l'ensemble desdits opérandes d'adresse : lit une donnée parmi lesdites données stockées précédemment dans ledit au moins un registre, met à jour ladite donnée, permettant ainsi de produire une donnée mise à jour, et écrit ladite donnée mise à jour dans ledit au moins un registre.

16. Dispositif de consultation électronique (10) selon la revendication 1, dans lequel, si les mêmes opérandes d'adresse apparaissent dans l'instruction et si des valeurs d'entrée incrémentales sont ajoutées ensemble, alors la valeur stockée dans un registre qui est adressé par les mêmes opérandes d'adresse est incrémentée une fois.

17. Dispositif de consultation électronique (10) selon la revendication 1, dans lequel la circuiterie logique délivre un signal d'activation pour chacun des opérandes d'adresse qui sont les mêmes.

18. Dispositif de consultation électronique (10) selon la revendication 17, dans lequel la circuiterie de traitement réalise au préalable un calcul de maximum entre des valeurs d'entrée incrémentales associées aux mêmes opérandes d'adresse.

19. Dispositif de consultation électronique (10) selon la revendication 18, dans lequel la circuiterie de traitement calcule une somme de valeurs d'entrée incrémentales associées aux mêmes opérandes d'adresse ; et, si la somme dépasse une largeur de sortie, alors saturer la somme.
